# EUROPEAN PATENT SPECIFICATION

(11) **EP 0 579 289 B1**
(45) Date of publication and mention of the grant of the patent: **04.04.2001**
(21) Application number: 93115988.3
(22) Date of filing: 14.11.1988
(51) Int. Cl.: B01D 53/04, C01B 3/56

(54) **Separation of gas mixtures**
Trennung von Gasgemischen
Séparation de mélanges gazeux

(30) Priority: 16.11.1987 GB 8726804
(43) Date of publication of application: 19.01.1994
(62) Divisional of application: 88310723.7
(73) Proprietor: The BOC Group plc, Windlesham Surrey GU20 6HJ (GB)
(72) Inventor: Krishnamurthy, Ramachandran, Piscataway, New Jersey 08854 (US); Stokley, Alan George, Wokingham, Berkshire RG11 1NY (GB); Lerner, Steven, South Berkeley Heights, New Jersey 07922 (US); Shukla, Yagya, Roselle Park, New Jersey 07204 (US)
(74) Representative: Wickham, Michael

(56) References cited:
- EP-A- 0 239 234
- WO-A-86/05414
- US-A- 4 171 207
- US-A- 4 732 596
- US-E- R E31 014

## Description

This invention relates to the separation by pressure swing adsorption of gas mixtures typically including hydrogen. It is particularly concerned with the separation of gas mixtures including hydrogen that are formed by reforming hydrocarbon with steam. The reaction between hydrocarbon and steam produces a gas mixture comprising hydrogen, carbon monoxide, carbon dioxide and water vapour as well as typically some residual methane.

The separation of hydrogen-rich gas mixtures, that is gas mixtures containing more than 50% by volume of hydrogen, by pressure swing adsorption is well known. One such pressure swing adsorption (PSA) cycle for separating hydrogen-rich gas mixture is disclosed in US-A-3 430 418. In the cycles disclosed therein, the hydrogen-rich gas mixture is separated into hydrogen product and a waste gas stream. Many commercially practised PSA processes utilise a similar cycle. They all have in common the feature of separating the incoming gas mixture into a hydrogen product stream and single vent gas stream. The vent gas stream is however generally unsuitable for the production of carbon monoxide as its carbon monoxide content is relatively low.

A more elaborate PSA cycle for separating a gas mixture rich in hydrogen is described in EP-A-8882. The disclosed cycles are stated to be suitable for separating a gas mixture comprising hydrogen, methane, and C₂ or higher hydrocarbons to recover separate hydrogen and methane products. There is no discussion of the use of the cycle to separate hydrogen and carbon monoxide products from a gas mixture comprising hydrogen, carbon monoxide and carbon dioxide, and hence three is no discussion as to how the process might be integrated into a plant using a steam reformer to produce hydrogen and carbon monoxide products.

Another proposal for separating gas mixtures comprising hydrogen and two other components is disclosed in WO-A-86/05414. The disclosed process withdraws both hydrogen and carbon monoxide-enriched gas from the same location. In practice, this makes it difficult to obtain a high purity hydrogen product.

Both US-RE-31014 and US-A-4171 207 disclose PSA processes for separating multi-component gas mixtures in order to produce three separate fractions. The PSA processes use two different adsorbents having different adsorptive properties in respect of the various components of the gas mixtures to be separated. On the other hand, the method according to the invention relates to a method of separating a gas mixture comprising at least three components, so as to form a first fraction enriched in a first component, a second fraction enriched in a second component and a third fraction enriched in a third component but employing only one adsorbent to effect the separation as between the components.

According to the present invention there is provided a method of separating a gas mixture comprising at least three components by pressure swing adsorption into three different fractions employing at least four in series pairs of first and second adsorptive regions, both of said first and second adsorptive regions of each pair comprising an adsorbent on which a second component of the gas mixture is more strongly adsorbed than a first component but less strongly than a third component, and each pair of first and second adsorptive regions performing a cycle of operations in chosen phase relationship to the other pairs of adsorptive regions, wherein the cycle of operations comprises the following steps in sequence:
(i) passing the gas mixture through the first and second adsorptive regions in series and withdrawing a first fraction enriched in said first component from the downstream end of the second adsorptive region;
(ii) stopping admission of the said gas mixture to the first adsorptive region;
(iii) equalising the pressure in the first and second adsorptive regions with the pressure in another pair of first and second regions at low pressure relative thereto;
(iv) withdrawing into a common pipeline a second fraction enriched in the second component from the downstream end of the first adsorptive region and from the upstream end of the second adsorptive region;
(v) withdrawing a third fraction enriched in the third component from the upstream end of the first adsorptive region;
(vi) purging the first and second adsorptive regions with gas enriched in the first component;
(vii) equalising the pressure in the first and second regions with the pressure in another pair of first and second adsorptive regions at high pressure relative thereto;
(viii) and pressurising the first and second adsorptive regions with gas mixture enriched in the first component;
and wherein in step (iv) either (a) the second fraction is withdrawn simultaneously from the downstream end of the first adsorptive region and the upstream end of second adsorptive region, or (b) the second adsorptive region is closed to the first adsorptive region, the second fraction is withdrawn first from the upstream end of the second adsorptive region and then from the downstream end of the first adsorptive region, and while the second fraction is being withdrawn from the upstream end of the second adsorptive region, a gas mixture enriched in said third component is passed into the first adsorptive region from its upstream end.

In one example of this invention, the gas mixture to be separated comprises hydrogen as the first component, carbon monoxide as the second component, and carbon dioxide as the third component.

By taking gas fractions enriched in carbon monoxide and carbon dioxide respectively from different positions relative to the adsorbent it is possible to enhance the carbon monoxide content of the gas fraction enriched in carbon monoxide. Moreover, by withdrawing the gas fraction enriched in carbon monoxide from both adsorptive regions, the final yield of carbon monoxide is greater than if the gas mixture enriched in carbon monoxide is taken from just one of the adsorptive regions.

By withdrawing the gas fraction enriched in carbon monoxide first from said second adsorptive region and then from said first adsorptive region, the said first adsorptive region is able to have introduced into it from its feed end a portion of said gas fraction enriched in carbon dioxide from another pair of first and second adsorptive regions while the second adsorptive region is producing the gas mixture enriched in carbon monoxide. Since the ratio of carbon dioxide to hydrogen or carbon monoxide is higher in the gas fraction enriched in carbon dioxide than it is in the feed gas mixture comprising hydrogen, carbon monoxide and carbon dioxide, admission of a portion of the gas fraction enriched in carbon dioxide to the first region while the second region is producing gas mixture enriched in carbon monoxide helps to displace hydrogen and carbon monoxide away from the feed end towards said intermediate location. Accordingly, when it is the turn of the first adsorption region to produce the gas fraction enriched in carbon monoxide, there is a greater concentration of carbon monoxide in the unadsorbed gas immediately adjacent the said intermediate location and thus the proportion of carbon monoxide in the gas fraction withdrawn from that location is enhanced. The presence of two adsorptive regions and the withdrawal of carbon monoxide-rich gas fraction from an intermediate location is the most effective use of the carbon dioxide rich gas fraction in terms of displacing carbon monoxide. Allowing time for carbon monoxide displacement after admitting the carbon dioxide rich gas fraction enhances the displacement thereby, producing a very high recovery of carbon monoxide.

In another example, the gas mixture comprises an ammonia plant purge gas from which ammonia has been removed. Such a gas mixture typically comprises hydrogen (the first component), argon (the second component), methane (the third component) and nitrogen. Nitrogen is more strongly adsorbed than argon and less strongly adsorbed than methane and, hence, distributes between the gas mixture enriched in argon and the gas mixture enriched in methane. In one example, the gas mixture to be separated comprises 61.6% by volume of hydrogen, 20.5% by volume nitrogen, 4.6% by volume argon, and 13.3% by volume methane. The invention is particularly useful in the separation of such mixture in view of the relatively high commercial value of the second component, argon.

The method and apparatus according to the present invention will now be described by way of example with reference to the accompanying drawings, in which :
Figure 1 is a schematic diagram illustrating an apparatus for producing hydrogen, carbon monoxide - enriched and carbon dioxide-enriched frictions by pressure swing adsorption.
Figure 2 is an alternative pressure swing adsorption apparatus to that shown in Figure 1.
Figure 3 is a schematic diagram of an adsorber for use in the apparatus shown in Figure 1;

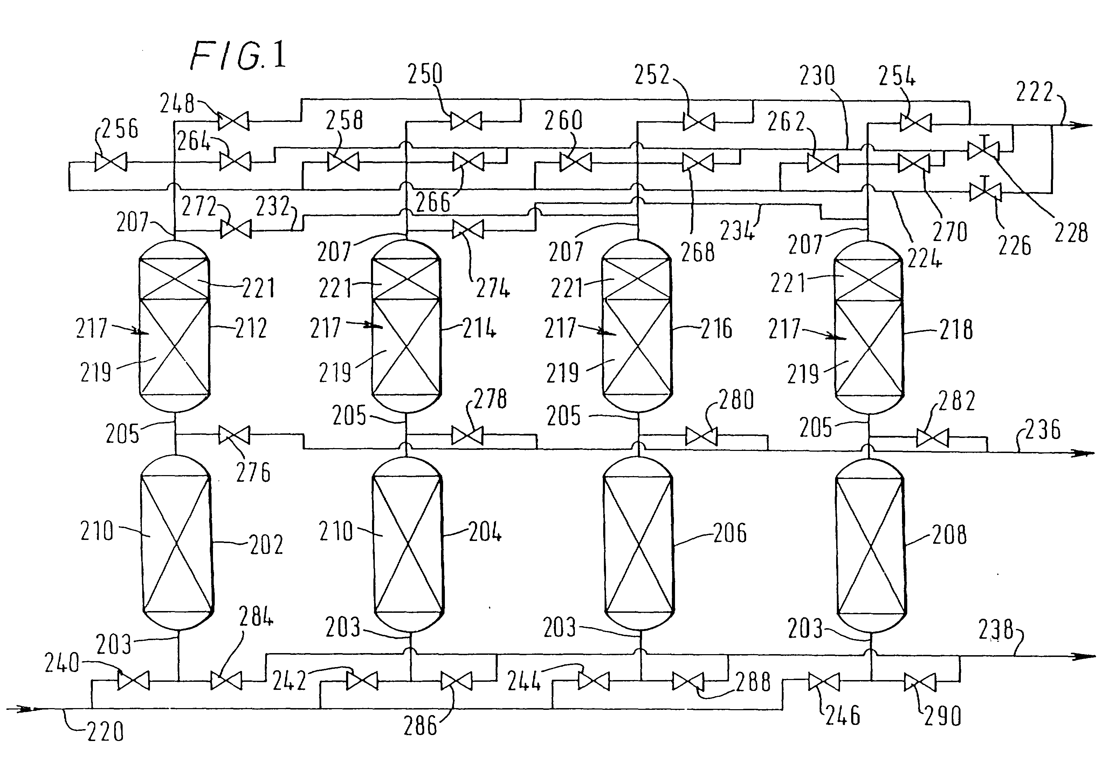

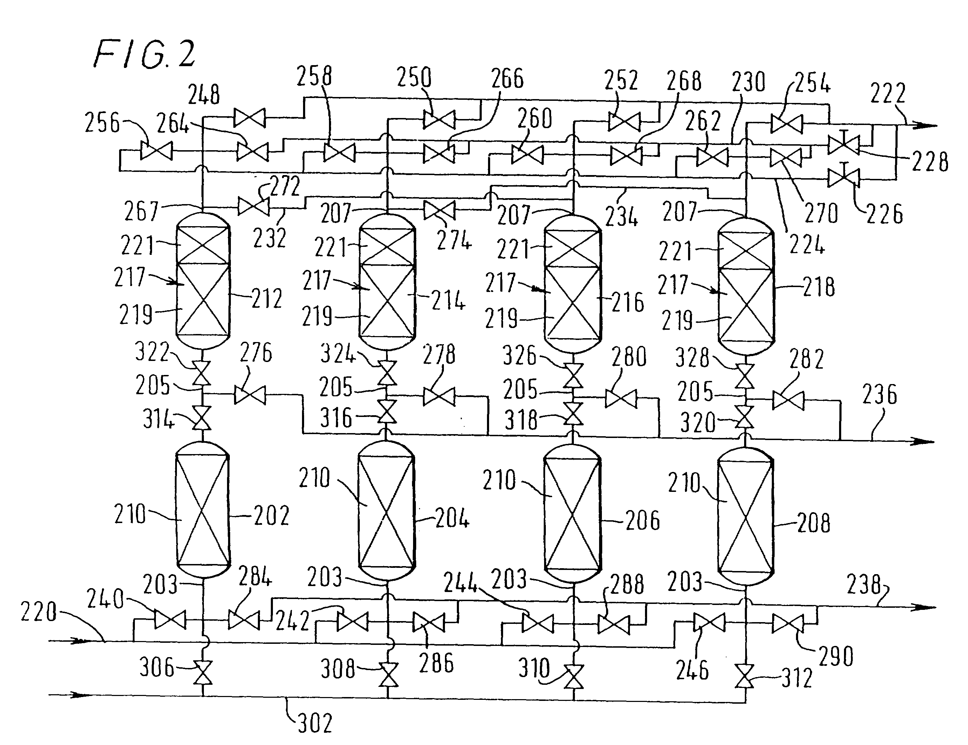

Referring to Figure 1, four adsorber vessels 202, 204, 206 and 208 of equal volume are connected in parallel to a feed gas inlet pipeline 220 which is intended for connection to a reformer. Each vessel contains a bed 210 of activated carbon adsorbent and has at its bottom, a gas port 203 able to be selectively placed in communication with the feed pipeline 220 and with a vent gas pipeline 238 for the withdrawal of carbon-dioxide enriched gas mixture and at its top a respective connecting conduit 205. The connecting conduits 205 provide through paths from the tops of the vessels to, respectively, the bottoms of adsorbert vessels 212, 214, 216 and 218. Each of the latter adsorber vessels contains a bed 217 of adsorbent comprising a lover layer 219 of activated carbon adsorbent and an upper layer 221 of zeolite molecular sieve adsorbent.
Each of said vessels has at its top a gas port 207 able to be placed selectively in communication with a hydrogen product pipeline 222, a purge gas pipeline 224 having a purge gas flow control valve 226 disposed therein, and a repressurisation gas pipeline 230 having a flow control valve 228 disposed therein. The purge gas and repressurisation pipelines both communicate with the hydrogen product pipeline 222 to enable the adsorber vessels to be respectively purified and repressurised with product hydrogen. In addition, the tops of the vessels 212 and 216 are interconnected by the pressure equalisation conduit 232, and the tops of the vessels 214 and 218 are similarly interconnected by a pressure equalisation conduit 234. The PSA plant shown in Figure 2 also includes an outlet pipeline 236 for carbon monoxide-enriched gas mixture which is connected to the conduits 205.

The flow paths taken by gas in operation of the plant shown in Figure 2 are determined by the positions of a number of stop valves. Thus, there are four stop valves 240, 242, 244 and 246 whose positions determine which of the vessels 202, 204, 206 and 208 is placed in communication with the feed pipeline 220; four stop valves 248, 250, 252 and 254 whose positions determine which of the vessels 212, 214, 216 and 218 supplies product gas to the hydrogen product pipeline 222; purge gas valves 256, 258, 260 and 262 to select which of the vessels 212, 214, 216 and 218 receives purge gas comprising product hydrogen; stop valves 264, 266, 268 and 270 which determine which of the vessels 212, 214, 216 and 218 is repressurised with hydrogen product gas from the pipeline 228. There are also stop valves 272 and 274 which determine whether the members of the respective pairs of vessels 212 and 216, and 214 and 218, are placed in communication with one another so as to equalise the gas pressures therebetween. Further, there are stop valves 276, 278, 280 and 282 whose positions determine which of the vessels supplies carbon monoxide-enriched gas mixture to the pipeline 236 and stop valves 284, 286, 288 and 290 which determine which of the vessels supplies carbon dioxide-enriched gas mixture to the pipeline 238.

As is well known in the art of pressure swing adsorption, all the stop valves may be controlled automatically on a predetermined schedule. Each of the pairs of vessels 202 and 212, 204 and 214, 206 and 216, and 208 and 218 is used to separate the reformed gas mixture in accordance with a cycle of operation which is now described with reference to the vessels 202 and 212. In the first step of the cycle, a gas mixture typically comprising 50 - 80% by volume of hydrogen, 8 -20% by volume of carbon monoxide, 0 - 3% by volume of methane, 10 - 30% by volume of carbon dioxide and saturated in water vapour is passed into the vessel 202 at a pressure typically in the range of 125 - 400 psig. Carbon dioxide and water vapour are strongly adsorbed on the activated carbon adsorbent in the bed 210 than carbon monoxide and methane. Thus, as the gas mixture flows through the adsorbent bed, it becomes progressively enriched in hydrogen. The gas mixture then flows into the vessel 212 and further adsorption takes place in the layer of activated carbon 217. By the time gas enters the upper layer of zeolite 221, it is predominantly hydrogen. The zeolite removes all but minute traces of the other gases to form hydrogen gas substantially free of all impurities. In particular, the zeolite removes any carbon dioxide that passes through the bed 210 and the lower layer 219 of the bed 217 as well as other gases so that the product hydrogen contains less than one volume per million of carbon monoxide and no measurable trace of any other impurity. The hydrogen product is withdrawn from the upper vessel 212 throughout the period in which the feed gas is introduced therein. This feed and production of hydrogen continues until there is about to occur a "break-out" of impurities from the adsorbent which would otherwise contaminate the hydrogen product. In a typical cycle, this feed and production lasts for from about two to six minutes.

In the next step of the process, the feed of gas to the vessel 202 through the port 203 and the withdrawal of hydrogen product through the port 207 are stopped and the top of the vessel 212 is placed in communication with the top of the vessel 216 which has previously been purged with product hydrogen. This reduces the pressure in vessels 210 and 212 while vessels 206 and 216 are pressurised with hydrogen gas of near product purity. As the gas flows out of the vessel 212, the pressure in vessels 210 and 212 falls and carbon monoxide tends to be desorbed from the adsorbent in preference to methane, carbon dioxide and water vapour. This step of the cycle typically lasts between about twenty and forty seconds and is ended by stopping communication between the tops of vessels 212 and 216.

The next step of the cycle is to withdraw carbon monoxide-enriched gas mixture from the beds 210 and 217 in the vessels 202 and 212 via the connecting conduit 205. Since in the previous step carbon monoxide has been desorbed from the absorbent, the gas mixture in the void spaces of the beds 210 and 217 in the vessels 202 and 212 has been enriched in carbon monoxide and now this gas mixture is withdrawn through the product pipeline 236. Withdrawal of the product causes the pressure in the vessels 202 and 212 to fall with further desorption of carbon monoxide. The arrangement of the plant shown in Figure 2 which enables carbon monoxide-enriched gas mixture to be withdrawn from the conduit 205 is particularly advantageous. If the carbon monoxide-enriched gas mixture were to be withdrawn from the top of the vessel 212, small amounts of carbon monoxide retained in the layer 221 in the bed 217 would contaminate the product in a subsequent hydrogen production step. Further, during withdrawal of the carbon monoxide-enriched gas mixture, carbon dioxide may reach and be adsorbed in the zeolite layer 221. Since complete desorption of the carbon dioxide from the molecular sieve requires a high flow rate of purge gas, carbon dioxide build-up may occur. This can adversely affect product purity and the efficient operation of the process cycle. Typically, the production of the carbon monoxide-enriched gas mixture continues for about two minutes and is stopped prior to a significant break out of carbon dioxide from the adsorbent in the vessels 202 and 212.

The resulting carbon monoxide-enriched mixture, which is produced at a pressure of between about 10 and 40 psig, generally contains at least about 20% by volume of carbon monoxide, the balance being mainly hydrogen with up to about 2% of methane and carbon dioxide.

The production of carbon monoxide-enriched gas mixture is stopped by ending communication between the pipeline 236 and the conduit 205 connecting the vessels 202 and 212. The next step of the cycle is to withdraw carbon dioxide-enriched gas mixture through port 203 at the bottom of the bed 210 in the vessel 202 and take it for further processing through the pipeline 238. The flow of carbon dioxide enriched gas mixture is countercurrent to the flow of the feed gas mixture in the hydrogen production step. The carbon dioxide enriched gas mixture is typically produced at a pressure of about 5 psig. The reduction in pressure during this step and the hydrogen product purge during the subsequent step is effective to cause desorption of carbon dioxide from the adsorbents. Generally, the withdrawal of the carbon dioxide-enriched gas mixture is continued for the period of for about 1-2 minutes (typically about 80 seconds). After depressurisation, additional withdrawal of the carbon dioxide-enriched gas mixture is performed by opening the port 207 of the vessel 212 to the hydrogen purge pipeline 224. The bed 217 is thus purged typically for about four minutes by a flow of hydrogen countercurrent to the direction in which the hydrogen is produced. The hydrogen purge gas tends to sweep out impurities from the void spaces in the bed 217 through the bed 210 in the vessel 202 into the pipeline 238. This gas mixture generally contains at least 50% by volume of carbon dioxide and less than 10% by volume of carbon monoxide, with the balance being mostly hydrogen with a small amount of methane and a trace amount of water vapour.

The next steps of the cycle are performed so as to prepare the beds 210 and 217 for further hydrogen production in the next cycle by building up the pressure and concentration of hydrogen in the void spaces of the beds 210 and 217. A further build up of pressure is then effected by ending communication between the purge gas pipeline 224 and the vessel 212 and placing the top of the vessel 216 in communication with the top of the vessel 212 through the pressure equalisation conduit 232, the vessel 216 having just completed its hydrogen production step while stopping communication between the port 203 of the vessel 202 and the pipeline 238.

There is a flow of hydrogen from the vessel 216 to the vessel 212. This step may be continued for a period of time in the range of 30 - 60 seconds (typically about 40 seconds). Communication between the vessels 212 and 216 is then ended and the vessels 212 and 202 are brought up to pressure by placing the top of the vessel 212 in communication with the product repressurisation pipeline 230. During this step, there is a back flow of hydrogen product into the vessels 212 and 202. The product repressurisation may be carried out for a period of from 3 - 4 minutes (typically 200 seconds) and then stopped by ending communication between the pipeline 230 and the port 207 of the vessel 212. The vessels 202 and 212 are then ready to perform the next cycle which is the same as the one described above.

Each pair of adsorber vessels 202 and 212, 204 and 214, 206 and 216, and 208 and 218 is used to perform the above-described cycle in predetermined phase relationship with the cycles performed using the other pairs of vessels. The respective phasing of the cycles and the positions of the stop valves required to effect switching from step to step is shown in Tables 1 and 2 below:

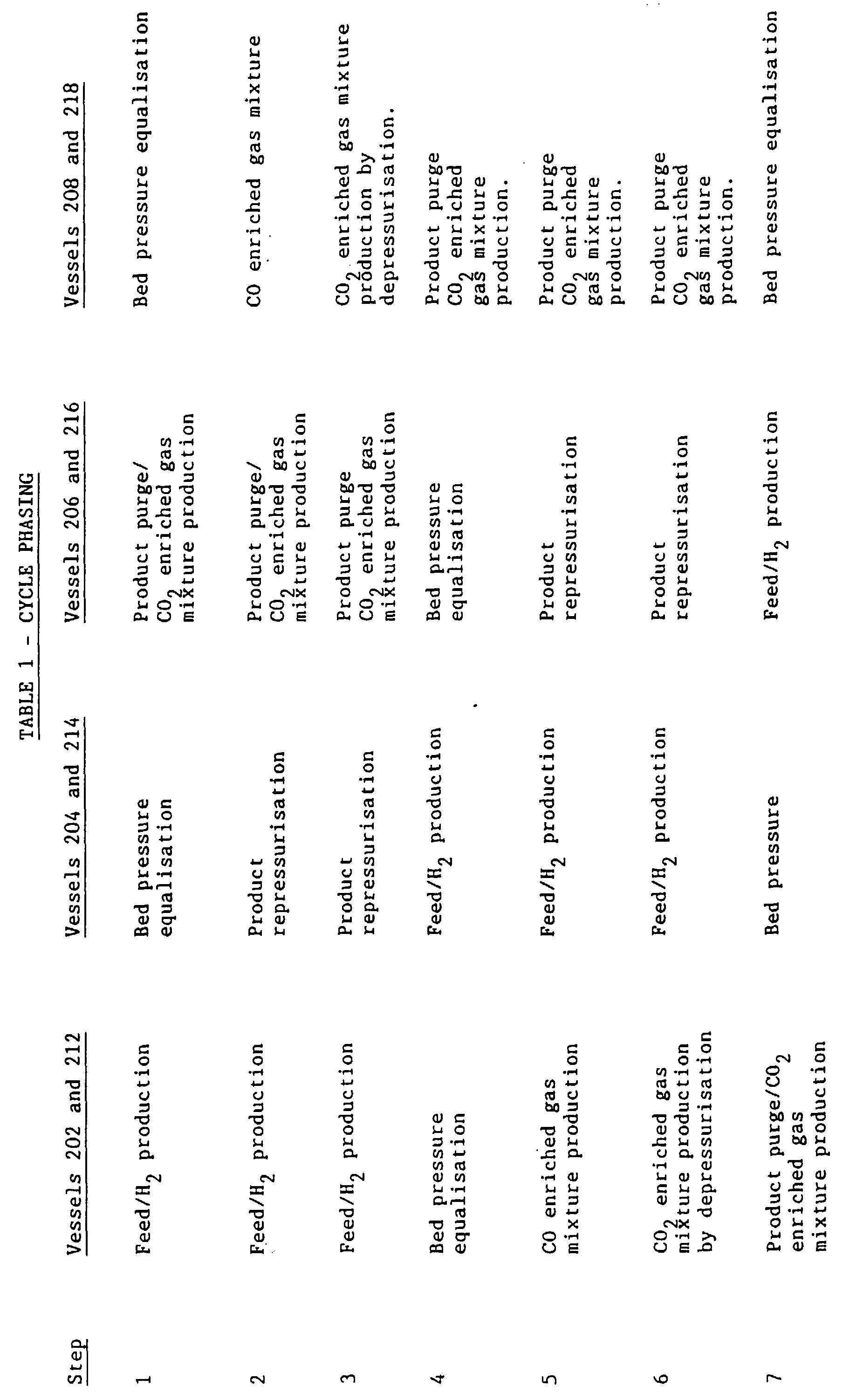

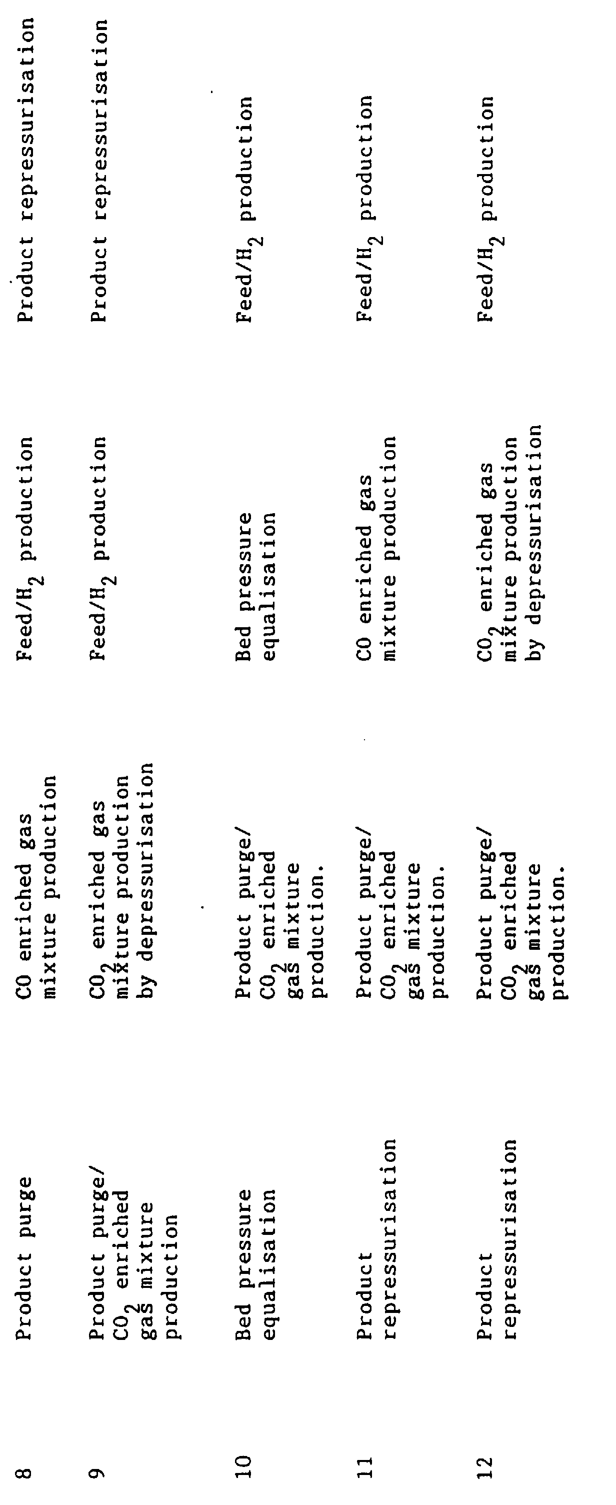

**TABLE 2**

| STOP VALVE OPERATION CHART | | |
|---|---|---|
| Stop | Time/secs | Stop Valves open * |
| 1 | 40 | 240, 248, 274, 260, 288 |
| 2 | 120 | 240, 248, 266, 260, 282, 288 |
| 3 | 80 | 240, 248, 260, 266, 288, 290 |
| 4 | 40 | 272, 242, 250, 262, 290 |
| 5 | 120 | 276, 242, 250, 268, 262, 290 |
| 6 | 80 | 284, 242, 250, 268, 262, 290 |
| 7 | 40 | 256, 274, 244, 252, 284 |
| 8 | 120 | 256, 278, 244, 252, 270, 284 |
| 9 | 80 | 256, 286, 244, 252, 270, 284 |
| 10 | 40 | 272, 258, 246, 254, 286 |
| 11 | 120 | 264, 258, 280, 246, 254, 286 |
| 12 | 80 | 264, 258, 288, 246, 254, 286 |

| | | |
|---|---|---|
| * Those stop valves not listed are closed. | | |

In Figure 2 there is illustrated a modification to the apparatus shown in Figure 1. Parts that are the same in both Figures are identified by the same reference numerals and will not be described again. The apparatus shown in Figure 2 is intended to perform similar cycles to the ones performed by the apparatus shown in Figure 1 with the exception of the carbon monoxide enriched gas mixture production step which is divided into parts (a) and (b). With reference to the vessels 202 and 212, in part (a), the carbon monoxide enriched gas mixture is only withdrawn from the upper vessel 212, whereas in part (b) it is only withdrawn from the vessel 202. Moreover, in part (a) the bed 210 in the vessel 202 is swept from its bottom with a portion of the carbon-dioxide enriched gas mixture produced in operation of the plant and compressed in the vent gas compressor 172 shown in Figure 1 to a suitable pressure (e.g. 260 psia). The effect of the sweep gas is to increase the recovery of carbon monoxide in the carbon monoxide enriched gas mixture. The sweep gas displaces carbon monoxide from the bottom of the bed 210 in the vessel 202 towards the top of the bed which enhances carbon monoxide production. In order to carry out this modification additional valves and pipelines are provided in the plant shown in Figure 2. Thus the conduit 205 connecting the vessels 202 and 212 has stop valves 314 and 322 so disposed therein that the pipeline 236 terminates in the conduit 205 at a location intermediate the valves 314 and 322. A pipeline 302 is provided for supplying the sweep gas. A stop valve 306, when open, permits the flow of gas from the pipeline 302 into the bottom of the vessel 202 through the port 203.

The pairs of vessels 204 and 214, 206 and 216, and 208 and 218 have, respectively, stop valves 316 and 324, 318 and 326, 320 and 328 disposed in their connecting conduits 205 corresponding to the stop valves 314 and 322. In addition, the vessels 204, 206 and 208 have associated therewith stop valves 308, 310 and 312, respectively, corresponding to the stop valve 306 associated with the port 203 of the vessel 202.

Typically, parts (a) and (b) of the carbon monoxide enriched gas mixture production step have durations in the order of 40 seconds and 80 seconds respectively. The respective phasing of the cycles performed using each pair of adsorbent vessels and the positions of the stop valves required to effect switching from step to step are shown in Tables 3 and 4 below.

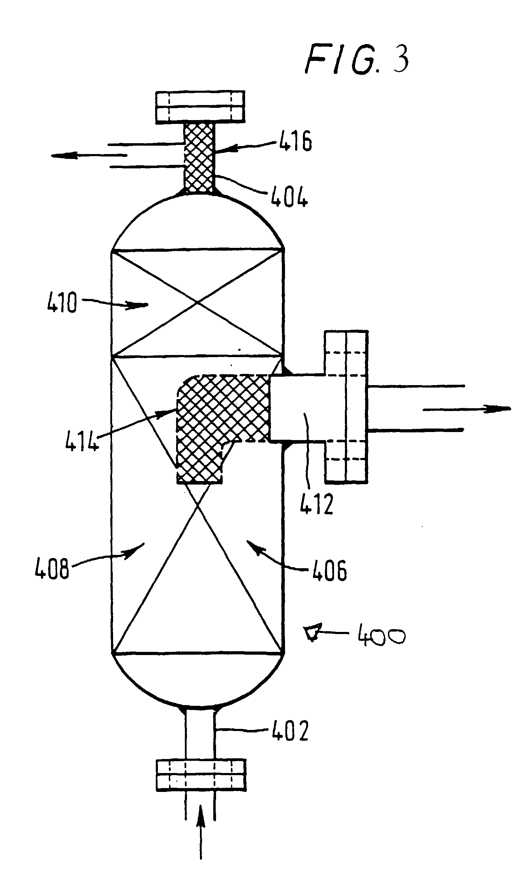

Referring again to the apparatus shown in Figure 1, it is possible to substitute for each pair of adsorbent vessels 202 and 212, 204 and 214, 206 and 216, and 208 and 218, a single adsorber vessel of the kind shown in Figure 4. The vessel 400 shown in Figure 3 is generally columnar in shape and has a port 402 at its bottom and a port 404 at its top. The vessel contains a bed 406 of adsorbent comprising a lower layer 408 of activated carbon and an upper layer 410 of zeolite molecular sieve. In addition to the ports 402 and 404, there is a port 412 in the side of the vessel which communicates with the interior of the layer 408 by means of a generally L-shaped tubular member 414 formed of fine mesh. There is a similar fine mesh member 416 disposed in the port 404. In operation, the feed gas mixture is passed into and carbon dioxide-enriched gas mixture withdrawn from the vessel 400 through the port 402, hydrogen product is withdrawn through the port 404 and carbon-monoxide enriched gas mixture is withdrawn through the port 412. It can be appreciated that the side port 412 communicating with the activated carbon layer 408 makes it possible to withdraw the carbon-monoxide enriched gas mixture from a location intermediate the withdrawal points of the hydrogen product and the carbon dioxide enriched gas mixture without the need to employ two separate adsorbent vessels. However, it is not possible to use such adsorbent vessels 400 in the apparatus shown in Figure 2 since it is not possible to isolate that part of the bed 406 below the tubular member 414 from the part thereabove.

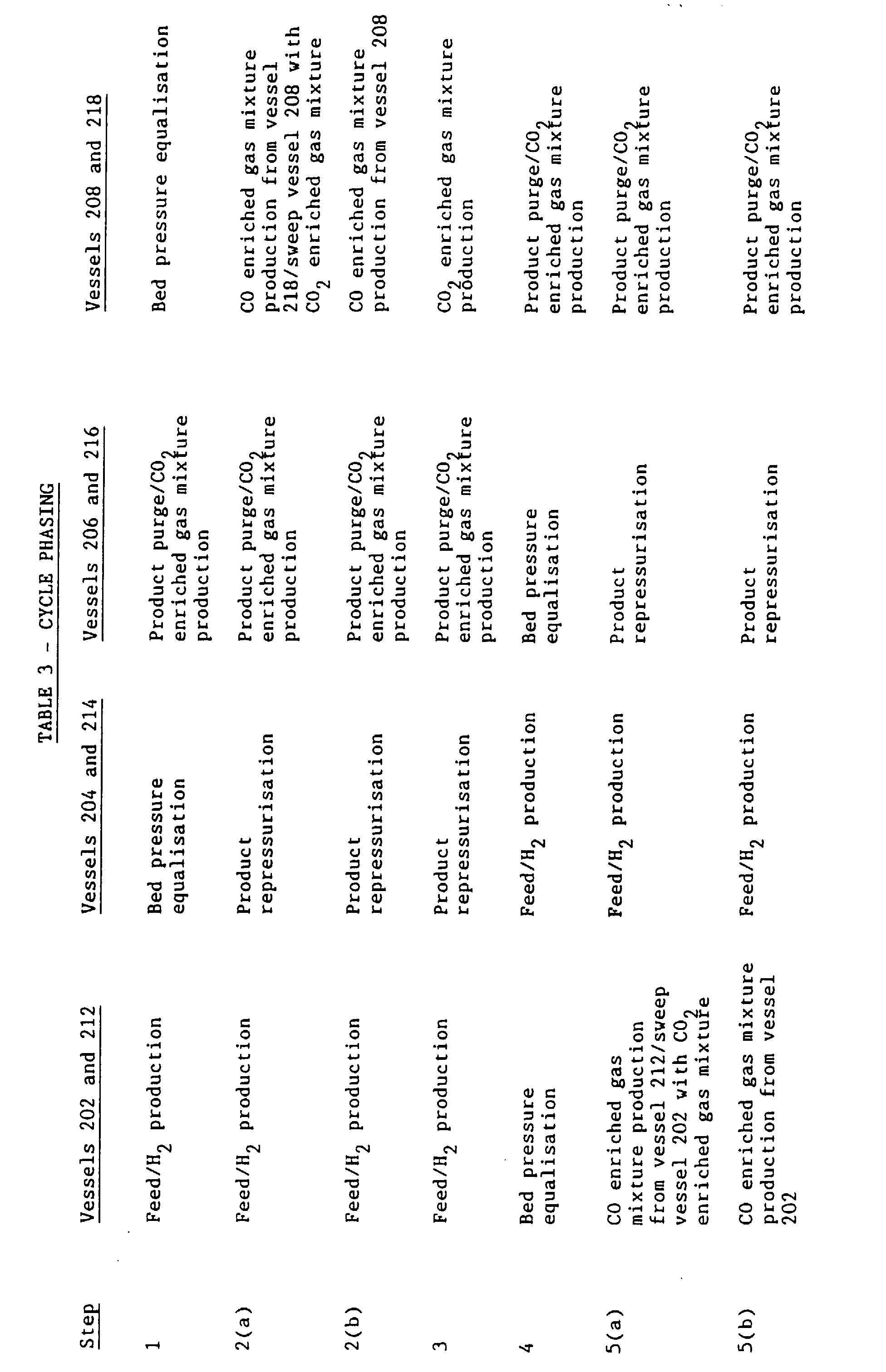

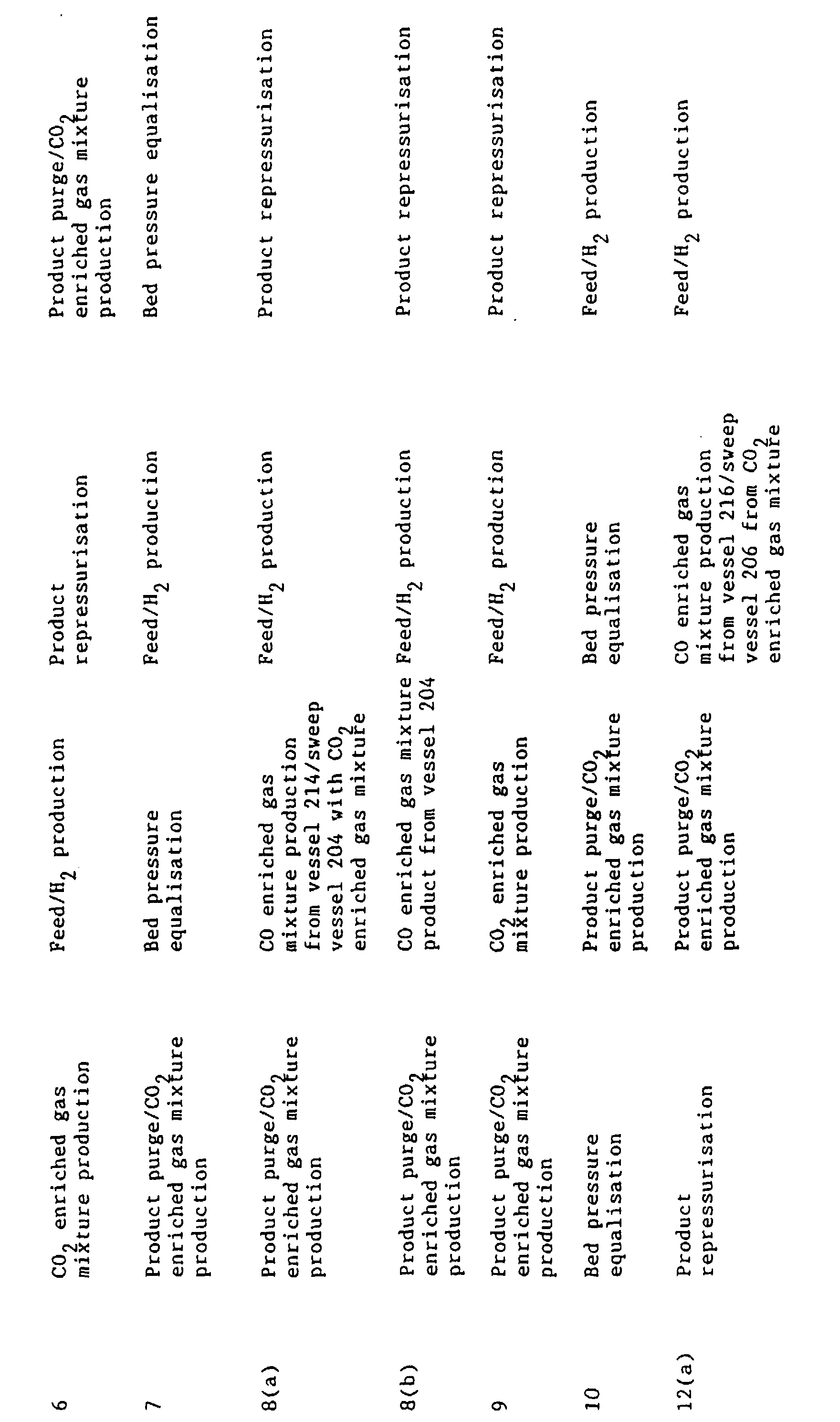

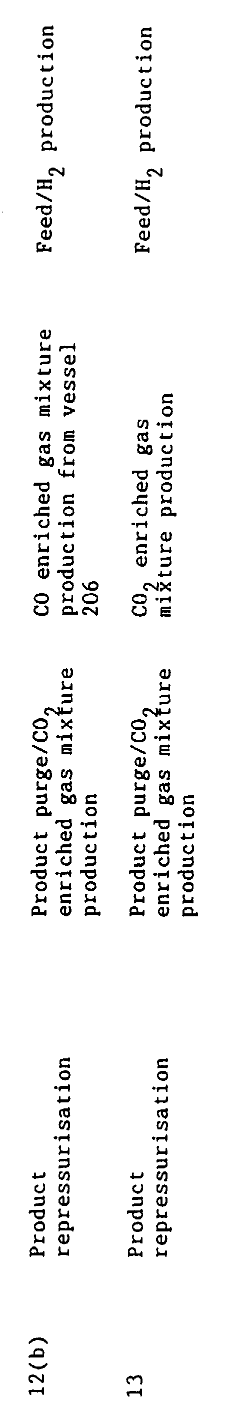

**TABLE 4 -**

| STOP VALVE OPERATION CHART | | |
|---|---|---|
| Stop | Time/secs | Stop Valves open * |
| 1 | 40 | 240,248,274,260,288,314,316,318,320,322,324,326,328 |
| 2(a) | 40 | 240,248,266,260,282,288,312,314,316,318,322,324,326,328, |
| 2(b) | 80 | 240,248,266,260,282,288,314,316,318,320,322,324,326 |
| 3 | 80 | 240,248,266,260,288,284,290,314,316,318,320,322,324,326, |
| 4 | 40 | 272,242,250,262,290,314,316,318,320,322,324,326,328 |
| 5(a) | 40 | 276,242,250,268,262,290,306,316,318,320,322,324,326,328 |
| 5(b) | 80 | 276,242,250,268,262,290,314,316,318,320,324,326,328 |
| 6 | 80 | 284,242,250,268,262,290,314,316,318,320,322,324,326,328 |
| 7 | 40 | 256,284,274,244,252,314,316,318,320,322,324,326,328 |
| 8(a) | 40 | 256,284,278,244,252,270,308,314,318,320,322,324,326,328 |
| 8(b) | 80 | 256,284,278,244,252,270,314,316,318,320,322,326,328 |
| 9 | 80 | 256,284,286,244,252,270,314,316,318,320,322,324,326,328 |
| 10 | 40 | 272,258,286,246,254,314,316,318,320,322,324,326,328 |
| 11(a) | 40 | 264,258,286,280,246,254,310,314,316,320,322,324,326,328 |
| 11(b) | 80 | 264,258,286,280,246,254,314,316,318,320,322,324,328 |
| 12 | 80 | 264,258,286,288,246,254,314,316,318,320,322,324,326,328 |

| | | |
|---|---|---|
| ^{*} Those stop valves not listed are closed. | | |

The method and apparatus according to the invention are further illustrated by the following examples.

### EXAMPLE 1

This example illustrates the use of the PSA process and apparatus described with reference to Figure 1 to separate an ammonia synthesis plant purge gas, after ammonia removal, into a hydrogen-rich gas fraction, an argon-enriched gas fraction and a methane-enriched gas fraction. The ammonia purge gas from a 1000 tonnes/day ammonia plant is available at a flow rate of approximately 15291 standard cubic metres per hour (m³/hr) (540,000 scfh), a pressure of 13100kPa (1900 psia) and a temperature of -23°C (-10°F) and comprises, by volume, 60.5% of hydrogen, 20% of nitrogen, 4.5% of argon, 13% of methane and 2% of ammonia. This purge gas is first expanded to 3100kPa (450 psia), scrubbed with water to remove all of the ammonia and then dried. Approximately, 14980m³/h (529,000 scfh) of ammonia-free, dry gas at 2930kPa (425 psia) and 24°C (75°F), comprising 61.6% of hydrogen, 20.5% of nitrogen, 4.6% of argon and 13.3% of methane is treated in a PSA system described with reference to Figure 1.

The feed gas enters the pipeline 220 in Figure 1. The entire packed bed portion of the first and second adsorptive regions in Figure 1 comprising vessels 202, 204, 206, 208, 212, 214, 216, and 218, are filled with a type 5A or similar zeolite molecular sieve. Methane is the most strongly adsorbed component on this sieve material followed by nitrogen, argon and hydrogen. The PSA process steps described in reference to Figure 1 are performed and the feed gas is separated into three gas fractions. The flow rate of the hydrogen-rich first fraction is approximately 7105m³/h (250,909 scfh). This fraction is comprised of 99.1% hydrogen and 0.45% each of argon and nitrogen. The pressure and temperature of this gas fraction collected in pipeline 222 in Figure 1 are 2861kPa (415 psia) and 24°C (75°F). Although the hydrogen product in this particular example is 99.1%, it is noted that, if desired, this product can be produced as pure as 99.999% hydrogen. The argon-enriched second gas fraction is collected in pipeline 236 at a pressure of approximately 483kPa (70 psia). The flow rate of this gas fraction is 3135m³/h (110,767 scfh) and it is comprised of 41.2% of hydrogen, 16.5% of argon, 39.2% of nitrogen and 3.1% of methane. The methane-enriched gas fraction is collected in pipeline 238 at a pressure of approximately 172kPa (25 psia) and at 75°F. The flow rate of this gas fraction is 4760m³h (168,143 scfh) and it is comprised of 19.4% of hydrogen, 2.9% of argon, 38.0% of nitrogen and 39.7% of methane.

The percent of argon in the feed gas to the PSA system that is recovered in the argon-enriched product is approximately 75%. The advantage of the system described in Figure 1 in this application over a conventional hydrogen PSA system is that , in addition to a desired purity hydrogen product, it also provides an argon-enriched product which can be purified to pure argon economically in comparison to other sources containing argon.

### EXAMPLE 2

Since the commercial value of argon is very high, it is advantageous to maximise argon recovered in the argon-enriched gas fraction. The process and apparatus described with reference to Figure 2 provides an alternate method for separating ammonia-free, dry ammonia synthesis plant purge gas into three gas fractions and increasing the percent of argon recovered in the argon-enriched fraction to nearly 85%.

Utilising the same adsorbent vessel packing as in Example 1 and the process steps described by referring to Figure 2, the fee gas is separated into three fractions. The flow rate of the hydrogen-rich first gas fraction comprising 99.1% of hydrogen and 0.45% each of argon and nitrogen collected in pipeline 222 is 6895m³/h (243,468 scfh) and is available at a pressure of 2861kPa (415psia) and a temperature of 24°C (75°F). The flow rate of this fraction is 5490m³/h (193,819 scfh) and it is comprised of 18.5% of hydrogen, 1.8% argon, 33.8% of nitrogen and 45.9% of methane. /a portion of the methane-rich gas stream equal to 1500m³/h (52,900 scfh) is compressed to a pressure of at least 1895kPa (275 psia) and admitted into the first adsorptive region through pipeline 302 and any one of valves 306, 308, 310 or 312 while the argon-enriched product is removed from the second adsorptive regions through the valves 322, 324, 326 or 328, respectively, as described in the detailed process steps with reference to Figure 1.

## Claims

1. A method of separating a gas mixture comprising at least three components by pressure swing adsorption into three different fractions employing at least four in series pairs of first and second adsorptive regions, both of said first and second adsorptive regions of each pair comprising an adsorbent on which a second component of the gas mixture is more strongly adsorbed than a first component but less strongly than a third component, and each pair of first and second adsorptive regions performing a cycle of operations in chosen phase relationship to the other pairs of adsorptive regions, wherein the cycle of operations comprises the following steps in sequence:
(i) passing the gas mixture through the first and second adsorptive regions in series and withdrawing a first fraction enriched in said first component from the downstream end of the second adsorptive region;
(ii) stopping admission of the said gas mixture to the first adsorptive region;
(iii) equalising the pressure in the first and second adsorptive regions with the pressure in another pair of first and second regions at low pressure relative thereto;
(iv) withdrawing into a common pipeline a second fraction enriched in the second component from the downstream end of the first adsorptive region and from the upstream end of the second adsorptive region;
(v) withdrawing a third fraction enriched in the third component from the upstream end of the first adsorptive region;
(vi) purging the first and second adsorptive regions with gas enriched in the first component;
(vii) equalising the pressure in the first and second regions with the pressure in another pair of first and second adsorptive regions at high pressure relative thereto;
(viii) and pressurising the first and second adsorptive regions with gas mixture enriched in the first component;
and wherein in step (iv) either (a) the second fraction is withdrawn simultaneously from the downstream end of the first adsorptive region and the upstream end of second adsorptive region, or (b) the second adsorptive region is closed to the first adsorptive region, the second fraction is withdrawn first from the upstream end of the second adsorptive region and then from the downstream end of the first adsorptive region, and while the second fraction is being withdrawn from the upstream end of the second adsorptive region, a gas mixture enriched in said third component is passed into the first adsorptive region from its upstream end.

2. A method according to claim 1 wherein said first component is hydrogen and either said second component is carbon monoxide, and said third component is carbon dioxide, or said second component is argon and said third component is methane.

## Patentansprüche

1. Verfahren zum Trennen eines Gasgemischs, das aus mindestens drei Komponenten besteht, durch Druckwechseladsorption in drei verschiedene Fraktionen unter Verwendung von mindestens vier in Reihe geschalteten Paaren erster und zweiter adsorptiver Bereiche, wobei sowohl der erste als auch der zweite adsoptive Bereich jedes Paars ein Adsorptionsmittel enthält, an welchem eine zweite Komponente des Gasgemischs stärker adsorbiert wird als eine erste Komponente, aber weniger stark als eine dritte Komponente, und wobei jedes Paar erster und zweiter adsorptiver Bereiche einen Funktionszyklus in gewählter Phasenlage mit Bezug auf die anderen Paar adsorptiver Bereiche durchführt, wobei der Funktionszyklus die folgenden Schritte sequentiell umfaßt:
i) Leiten des Gasgemischs seriell durch die ersten und zweiten adsorptiven Bereiche und Abziehen einer ersten, an der genannten ersten Komponente angereicherten Fraktion vom stromabwärtigen Ende des zweiten adsorptiven Bereichs,
ii) Beenden der Zufuhr des Gasgemischs in den ersten adsorptiven Bereich,
iii) Ausgleichen des Drucks in den ersten und zweiten adsorptiven Bereichen mit dem Druck in einem anderen Paar erster und zweiter Bereiche, die relativ dazu auf niedrigem Druck sind,
iv) Abziehen einer zweiten, an der zweiten Komponente angereicherten Fraktion vom stromabwärtigen Ende des ersten adsorptiven Bereichs und vom stromaufwärtigen Ende des zweiten adsorptiven Bereichs in eine gemeinsame Rohrleitung,
v) Abziehen einer dritten, an der dritten Komponente angereicherten Fraktion vom stromaufwärtigen Ende des ersten adsorptiven Bereichs,
vi) Spülen der ersten und zweiten adsorptiven Bereiche mit an der ersten Komponente angereichertem Gas,
vii) Ausgleichen des Drucks in den ersten und zweiten Bereichen mit dem Druck in einem anderen Paar erster und zweiter adsorptiver Bereiche, die relativ dazu unter hohem Druck stehen,
viii) und Druckbeaufschlagen der ersten und zweiten adsorptiven Bereiche mit an der ersten Komponente angereichertem Gasgemisch,
und wobei in Schritt iv) entweder a) die zweite Fraktion gleichzeitig vom stromabwärtigen Ende des ersten adsorptiven Bereichs und dem stromaufwärtigen Ende des zweiten adsorptiven Bereichs abgezogen wird, oder b) der zweite adsorptive Bereich gegenüber dem ersten adsorptiven Bereich abgesperrt wird und die zweite Fraktion zuerst vom stromaufwärtigen Ende des zweiten adsorptiven Bereichs und dann vom stromabwärtigen Ende des ersten adsorptiven Bereichs abgezogen wird, und, während die zweite Fraktion vom stromaufwärtigen Ende des zweiten adsorptiven Bereichs abgezogen wird, ein an der genannten dritten Komponente angereichertes Gasgemisch vom stromaufwärtigen Ende her in den ersten adsorptiven Bereich eingeleitet wird.

2. Verfahren nach Anspruch 1, wobei die genannte erste Komponente Wasserstoff und entweder die genannte zweite Komponente Kohlenmonoxid und die genannte dritte Komponente Kohlendioxid ist oder die genannte zweite Komponente Argon und die genannte dritte Komponente Methan ist.

## Revendications

1. Procédé de séparation par adsorption à pression alternée d'un mélange gazeux comprenant au moins trois composants en trois fractions différentes en utilisant au moins quatre paires en série de première et seconde zones adsorbantes, l'une et l'autre desdites première et seconde zones adsorbantes de chaque paire comprenant un adsorbant sur lequel un second composant du mélange gazeux est plus fortement adsorbé qu'un premier composant mais moins fortement qu'un troisième composant, et chaque paire des première et seconde zones adsorbantes effectuant un cycle d'opérations en relation de phase choisie par rapport aux autres paires de zones adsorbantes, dans lequel le cycle d'opérations comprend les étapes suivantes en séquence :
(i) passage du mélange gazeux dans les première et seconde zones adsorbantes en série et prélèvement d'une première fraction enrichie en dit premier composant depuis l'extrémité aval de la seconde zone adsorbante ;
(ii) arrêt de l'introduction dudit mélange gazeux dans ladite première zone adsorbante ;
(iii) égalisation de la pression dans les première et seconde zones adsorbantes avec la pression dans une autre paire de première et seconde zones sous une faible pression relative à celle-ci ;
(iv) prélèvement, dans une canalisation commune, d'une seconde fraction enrichie en second composant, depuis l'extrémité aval de la première zone adsorbante et depuis l'extrémité amont de la seconde zone adsorbante ;
(v) prélèvement d'une troisième fraction enrichie en troisième composant depuis l'extrémité amont de la première zone adsorbante ;
(vi) purge des première et seconde zones adsorbantes avec du gaz enrichi en premier composant ;
(vii) égalisation de la pression dans les première et seconde zones avec la pression dans une autre paire de première et seconde zones adsorbantes sous une forte pression relative à celle-ci ;
(viii) et mise sous pression des première et seconde zones adsorbantes avec du mélange gazeux enrichi en premier composant ;
et dans lequel, à l'étape (iv), soit (a) la seconde fraction est prélevée simultanément depuis l'extrémité aval de la première zone adsorbante et depuis l'extrémité amont de la seconde zone adsorbante, soit (b) la seconde zone adsorbante est fermée à la première zone adsorbante, la seconde fraction est prélevée d'abord de l'extrémité amont de la seconde zone adsorbante, puis de l'extrémité aval de la première zone adsorbante, et, pendant que la seconde fraction est en cours de prélèvement depuis l'extrémité amont de la seconde zone adsorbante, un mélange gazeux enrichi en dit troisième composant est envoyé dans la première zone adsorbante depuis son extrémité amont.

2. Procédé selon la Revendication 1, dans lequel ledit premier composant est l'hydrogène et, soit ledit second composant est le monoxyde de carbone et ledit troisième composant est le dioxyde de carbone, soit ledit second composant est l'argon et ledit troisième composant est le méthane.
